# EUROPÄISCHE PATENTSCHRIFT

(11) **EP 3 598 882 B1**
(45) Veröffentlichungstag und Bekanntmachung des Hinweises auf die Patenterteilung: **24.08.2022**
(21) Anmeldenummer: 19187539.2
(22) Anmeldetag: 22.07.2019
(51) Int. Cl.: A01D 34/66

(54) **LANDWIRTSCHAFTLICHES ANBAUGERÄT**
AGRICULTURAL CULTIVATION DEVICE
ACCESSOIRE AGRICOLE

(30) Priorität: 26.07.2018 DE 202018104321 U; 19.09.2018 DE 202018105380 U
(43) Veröffentlichungstag der Anmeldung: 29.01.2020
(73) Patentinhaber: PÖTTINGER Landtechnik GmbH, 4710 Grieskirchen (AT)
(72) Erfinder: Dietachmair, Andreas, 4710 Grieskirchen (AT)
(74) Vertreter: Thoma, Michael

(56) Entgegenhaltungen:
- EP-A1- 0 511 922
- EP-A1- 0 601 484
- EP-B1- 0 914 761
- DE-U1-202007 015 638
- US-A- 4 972 664

## Beschreibung

Die vorliegende Erfindung betrifft ein landwirtschaftliches Anbaugerät zum Anbauen an einen Schlepper, insbesondere einen Schlepper in Form einer Mähmaschine, mit einem Anbaubock, der Befestigungsmittel zum Befestigen am Schlepper aufweist, einem am Anbaubock aufgehängten Arbeitsaggregat, das um eine liegende Schwenkachse zwischen einer abgesenkten Arbeitsstellung und einer angehobenen Transport- und/oder Vorgewendestellung schwenkbar gelagert ist, sowie zumindest zwei Entlastungsfedern zur Gewichtsentlastung des Arbeitsaggregats in der abgesenkten Arbeitsstellung, die unterschiedliche Angriffspunkte am Arbeitsaggregat und/oder unterschiedliche Hebelarme bezüglich der Schwenkachse aufweisen.

Beispielsweise zeigt die Schrift EP 0601484 A1 ein solches Mähwerk, bei dem einerseits die Tragarme durch Federn entlastet sind und andererseits der zu den Tragarmen verkippbare Mähtrommelträger durch weitere Federn entlastet ist. Auch die US 4 972 664 A zeigt ein Mähwerk mit mehreren Federn zur Gewichtsentlastung.

Landwirtschaftliche Anbaugeräte sollen in kupiertem Gelände möglichst leichtfüßig über Bodenwellen, Hügel, Senken und andere Unebenheiten hinwegschweben bzw. mit definiertem, möglichst gleichbleibendem Anpressdruck am Boden aufliegen. Hierfür ist es vorteilhaft, wenn die Arbeitsaggregate gegenüber dem Anbaubock, der am Schlepper beispielsweise mit einer Dreipunktanlenkung befestigt wird, höhenverstellbar sind, beispielsweise über eine Aufhängung mit einem Ausleger und/oder einer oder mehrerer Schwenkachsen, so dass das Arbeitsaggregat bei Auflaufen auf eine Bodenerhebung nach oben fahren bzw. bei Überfahren einer Senke nach unten fahren kann, auch wenn der Schlepper mit dem daran befestigten Anbaubock nicht oder nicht gleichzeitig auf die Erhebung oder in die Senke fährt.

Eine solche Höhenverstellbarkeit des Arbeitsaggregats gegenüber dem Anbaubock ist insbesondere bei Mähmaschinen von Bedeutung, bei denen der Mähbalken bzw. die Mähtrommeln das Erntegut gleichmäßig knapp über dem Boden abschneiden sollen, ohne dass die Messer durch Bodenberührung schaden nehmen oder den Boden beschädigen. In ähnlicher Weise kann eine solche Höhenverstellbarkeit aber auch bei anderen Anbaugeräten von Vorteil sein, beispielsweise mit einer Stachelwalze arbeitenden Mergern oder gegebenenfalls auch Rechkreiselschwadern oder anderen dicht am Boden arbeitenden Ernte- bzw. Grünlandgeräten. Dies gilt insbesondere dann, wenn die Arbeitsaggregate vom Anbaubock seitlich auskragen, so dass das Arbeitsaggregat auf Bodenunebenheiten trifft, die nicht in der Schlepperspur liegen. Andererseits kann eine solche höhenverstellbare Aufhängung aber auch von Vorteil sein, wenn das Arbeitsaggregat relativ weit nach vorne oder hinten gegenüber dem Schlepper auskragt.

Um eine gute Bodenanpassung auch bei unterschiedlichen Unebenheiten bzw. Bodenkonturierungen zu ermöglichen, ist es von Vorteil, wenn das Arbeitsaggregat gegenüber dem Anbaubock sowohl verkippbar als auch mehr oder minder gleichmäßig höhenverstellbar ist, insbesondere wenn das Arbeitsaggregat eine größere Arbeitsbreite besitzt, so dass bei Überfahren einer Quersenke das ganze Arbeitsaggregat im Wesentlichen gleichmäßig nach oben oder nach unten fahren kann und bei Überfahren einer schrägen Bodenunebenheit oder Anfahren an eine beginnende Hangschräge das Arbeitsaggregat verkippen kann, beispielsweise mit einem linken Rand stärker nach oben fahren kann als mit einem rechten Rand. Um eine solche mehrgliedrige bzw. mehrachsige Bodenanpassung zu ermöglichen, kann es von Vorteil sein, wenn zwischen dem Anbaubock und dem Arbeitsaggregat eine liegende Schwenkachse vorgesehen ist, um die das Arbeitsaggregat gegenüber dem Anbaubock verschwenken kann, und diese Schwenkachse selbst höhenverstellbar ist, beispielsweise durch Vorsehen der Schwenkachse an einem auskragenden Ausleger, der selbst wiederum um eine liegende Schwenkachse am Anbaubock angelenkt ist.

Um Anbaugeräte mit einer solchen mehrgliedrigen bzw. mehrachsigen Beweglichkeit des Arbeitsaggregats gegenüber dem Anbaubock gleichmäßig und für die verschiedenen Beweglichkeiten individuell gewichtsentlasten zu können, wurde bereits vorgeschlagen, mehrere Entlastungsfedern vorzusehen, die das Arbeitsaggregat gegenüber dem Anbaubock gewichtsentlasten, dabei jedoch an verschiedenen Anlenkpunkten angreifen und/oder verschiedene, insbesondere zueinander gespreizte Wirklinien aufweisen, sodass bei Kippbewegungen des Arbeitsaggregats mehr die eine Entlastungsfeder und bei eher gleichmäßigen Höhenbewegungen eher die andere Entlastungsfeder eine Verstellung erfährt. Hierdurch ist es möglich, die Entlastungskräfte für die verschiedenen Ausweichbewegungen individuell zu konfigurieren, um die Gewichtsentlastung für jede der Ausgleichsbewegungen zu optimieren.

Bei solchen Entlastungssystemen mit mehreren Entlastungsfedern, die zueinander gespreizte Wirklinien haben und/oder an verschiedenen, von der Schwenkachse unterschiedlich beabstandeten Angriffspunkten angreifen und/oder bezüglich der Schwenkachse verschiedene Hebelarme aufweisen, ist es jedoch nicht ganz einfach, die Entlastungskräfte für verschiedene Arbeitsbedingungen und/oder verschiedene Bodenverhältnisse jeweils passend einzustellen. Soll beispielsweise für weiche Böden mit stärkeren Bodenunebenheiten eine stärke Gewichtsentlastung eingestellt werden, reicht es regelmäßig nicht aus, nur eine der Entlastungsfedern zu verstellen.

Eine Mähmaschine mit einem seitlich auskragenden, an einem Anbaubock aufgehängten Mähaggregat ist beispielsweise aus der Schrift EP 0 723 739 B1 bekannt, wobei hier der Mähbalken des Mähaggregats um eine liegende Achse schwenkbar an einem Ausleger angelenkt ist, der selbst wiederum schwenkbar am Anbaubock angelenkt ist. Hierbei wird die Feder mittels Kolben bzw. Zylinder angesteuert. Dabei greift eine Entlastungsfeder an einem Tragrahmenteil an, welches mit dem Mähbalken verbunden ist, um eine Gewichtsentlastung des Mähaggregats zu erzielen. Dabei ist die Feder an einer Übertragerstange in unterschiedlichen Stellungen fixierbar, um die Entlastungskraft verstellen zu können. Ferner zeigt die Schrift EP 0 914 761 B1 eine Mähmaschine mit zwei seitlich zu gegenüberliegenden Seiten auskragenden Mähaggregaten, die in ähnlicher Weise schwenkbar an Auslegern angelenkt sind, wobei hier für jedes der Arbeitsaggregate zwei Entlastungsfedern zur Gewichtsentlastung vorgesehen sind. Allerdings sind die Entlastungsfedern eines jeden Arbeitsaggregats zueinander parallel angeordnet, d.h. sie greifen an denselben Angriffspunkten an und besitzen zueinander parallele Wirklinien. Die Entlastungsfedern, die auf unterschiedlichen Seiten für die rechten und linken Arbeitsaggregate vorgesehen sind, sind dabei miteinander über eine Koppelstange aneinander gekoppelt, die längenverstellbar ist, um die Federkraft voreinzustellen. Aufgrund der gleichen Angriffspunkte und der parallelen Wirklinien der Federn auf derselben Aggregatseite ist eine individuelle Federentlastung bezüglich verschiedener Ausgleichsbewegungen nicht möglich.

Der vorliegenden Erfindung liegt daher die Aufgabe zugrunde, ein verbessertes landwirtschaftliches Anbaugerät der eingangs genannten Art zu schaffen, das Nachteile des Standes der Technik vermeidet und letzteren in vorteilhafter Weise weiterbildet. Insbesondere soll mit versetzt angreifenden und/oder in unterschiedlichen Wirklinien wirksamen Entlastungsfedern für verschiedene Ausweichbewegungen eine jeweils individuelle Gewichtsentlastung erzielt werden, die trotzdem in einfacher Weise an verschiedene Bodenbeschaffenheiten und Arbeitsbedingungen in ihrer Federkraft einfach voreinstellbar sind.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, für die mehreren Entlastungsfedern trotz ihrer unterschiedlichen Angriffspunkte und/oder ihrer unterschiedlichen Wirkungslinien eine gemeinsame Verstellvorrichtung zum gemeinsamen, aufeinander abgestimmten Verstellen der Entlastungsfedern vorzusehen. Auch wenn die Entlastungsfedern in unterschiedliche Richtungen ziehen und/oder an unterschiedlichen Aufhängungsteilen bzw. Angriffspunkten angreifen und für verschiedene Ausgleichsbewegungen des Arbeitsaggregats eine individuelle Gewichtsentlastung vorsehen, kann durch eine solche gemeinsame Verstellvorrichtung eine einfache Voreinstellung der Entlastungswerte beider bzw. aller Entlastungsfedern vorgenommen werden. Insbesondere können die Entlastungsfedern mit nur einer Einstellbewegung gleichzeitig hinsichtlich ihrer Entlastungswerte und/oder ihrer Wirklinien-Winkelstellungen voreingestellt werden, wobei die Kopplung der Verstellbewegungen durch die gemeinsame Verstellvorrichtung sicherstellt, dass die Entlastungskräfte in ihrem Verhältnis zueinander passend für das Gerät verstellt werden und den verschiedenen Entlastungsbewegungen gerecht werden bzw. bleiben.

Die genannte Verstellvorrichtung ist gemäß der Erfindung dazu ausgebildet, die anbaubockseitigen Anlenkpunkte der Entlastungsfedern zu verstellen. Grundsätzlich können zwar auch die Anlenkpunkte der Entlastungsfedern am Anbaugerät verstellt werden, was gegebenenfalls zusätzlich zur Verstellung der anbaubockseitigen Anlenkpunkte erfolgen kann. Durch eine Verstellung der anbaubockseitigen Anlenkpunkte kann jedoch, da dort üblicherweise die Entlastungsfedern näher aneinander angelenkt sind, leichter eine zentrale Verstellung erzielt werden.

Vorteilhafterweise werden die Entlastungsfedern trotz gemeinsamer Verstellvorrichtung dabei nicht in gleicher Weise verstellt. Die Verstellvorrichtung kann vorteilhafterweise dazu ausgebildet sein, einen Spreizwinkel zwischen den Wirklinien der Entlastungsfedern zu verändern und/oder den Federkraftwert der einen Entlastungsfeder stärker zu verstellen als den Federkraftwert der anderen Entlastungsfeder und/oder in Wirklinienrichtung den Anlenkpunkt der einen Entlastungsfeder stärker als den Anlenkpunkt der anderen Entlastungsfeder zu verstellen.

In vorteilhafter Weise zur Erfüllung der Erfindung kann die Verstellvorrichtung einen Verstellmechanismus mit einem beweglichen Stellteil umfassen, der eine zentrale Betätigungsbewegung in unterschiedliche Stellbewegungen für die verschiedenen Entlastungsfedern umsetzt. Insbesondere kann der genannte Verstellmechanismus dazu ausgebildet sein, zumindest eine der Federn in ihrer Vorspannkraft bzw. in ihrem Entlastungskraftwert zu verstellen und gleichzeitig die andere Entlastungsfeder - bzw. bei mehr als zwei Entlastungsfedern zumindest eine weitere Entlastungsfeder - in ihrer Wirklinie zu verstellen, so dass ein Spreizwinkel zwischen den Wirklinien der Entlastungsfedern und/oder ein Abstand zwischen Wirklinien verändert wird.

Der genannte Verstellmechanismus kann hierbei als Stellteil eine Anlenkkonsole umfassen, an der die beiden Entlastungsfedern angelenkt sein können und/oder mit der die Anlenkpunkte der Entlastungsfedern verbindbar oder kuppelbar sein können, so dass eine Verstellbewegung der genannten Anlenkkonsole die Anlenkpunkte der Entlastungsfedern verstellt.

Die genannte Anlenkkonsole kann hierbei in unterschiedlicher Weise beweglich gelagert sein, beispielsweise translatorisch verschieblich und/oder um zumindest eine Schwenkachse verschwenkbar und/oder in verschiedene Konsolenstellungen versetzbar.

Insbesondere kann die genannte Anlenkkonsole für die Entlastungsfedern am Anbaubock oder einem damit verbundenen Aufhängungsteil um eine Konsolenschwenkachse schwenkbar gelagert sein, wobei Haltemittel zum Halten der Anlenkkonsole in verschiedenen Schwenkstellungen vorgesehen sein können. Hierdurch ist es insbesondere möglich, die Anlenkkonsole in verschiedene Stellungen zu verkippen und in diesen Kippstellungen - gegebenenfalls mit einem gewünschten Freilauf oder Spiel in verschiedenen Kippstellungsbereichen - festzuhalten, um verschiedene Federentlastungswerte und/oder Wirklinien für die Entlastungsfedern einzustellen.

Vorteilhafterweise sind die genannten Entlastungsfedern an voneinander beabstandeten Konsolenabschnitten angelenkt, welche Konsolenabschnitte bezüglich der Konsolenschwenkachse unterschiedlich weit beabstandet und/oder mit unterschiedlichen Hebelarmen versehen sind. Hierdurch erfahren die Anlenkpunkte der Entlastungsfedern an der Anlenkkonsole unterschiedliche Verstellbewegungen wenn die Anlenkkonsole um die Konsolenschwenkachse verschwenkt wird.

Die genannten Haltemittel können beispielsweise als Verriegelungsmittel ausgebildet sein und die Anlenkkonsole in verschiedenen Stellungen formschlüssig verriegeln und festhalten. Beispielsweise kann ein lösbarer Riegelbolzen vorgesehen sein, der in verschiedene Stellungen versetzbar sein kann und/oder die Anlenkkonsole in verschiedenen Schwenkstellungen und/oder Schiebestellungen verriegeln kann.

Die genannte Konsolenschwenkachse, um die die Anlenkkonsole verschwenkt sein kann, kann sich vorteilhafterweise im Wesentlichen liegend erstrecken und/oder im Wesentlichen parallel zu der zumindest einen Schwenkachse ausgerichtet sein, um die das Arbeitsaggregat aus einer Arbeitsstellung in die Transport- und/oder Vorgewendestellung ausgehoben werden kann.

In besonders vorteilhafter Weise kann das Arbeitsaggregat an einem Ausleger schwenkbar angelenkt sein, der seinerseits wiederum schwenkbar am Anbaubock angelenkt ist und von diesem in der Arbeitsstellung beispielsweise seitlich quer zur Fahrtrichtung auskragen kann. Vorteilhafterweise kann eine der Entlastungsfedern an besagtem Ausleger angreifen und eine andere Entlastungsfedern an einem Rahmenteil des Arbeitsaggregats angreifen, das an dem genannten Ausleger schwenkbar angelenkt ist. Insbesondere können die Entlastungsfedern auf unterschiedlichen Seiten bzw. gegenüber liegenden Seiten der zumindest einen Schwenkachse angreifen, um die das Arbeitsaggregat gegenüber dem genannten Ausleger verschwenkbar ist, so dass die eine Entlastungsfeder die Gewichtsentlastung bei Schwenkbewegungen bzw. Kippbewegungen des Arbeitsaggregats steuert und die andere Entlastungsfeder Wippbewegungen des Auslegers und damit eher gleichmäßige Auf- und Abbewegungen des Arbeitsaggregats und die Gewichtsentlastung hierfür steuert.

Anbaubockseitig können die genannten Entlastungsfedern dabei an dem zuvor erläuterten Stellteil des Verstellmechanismus, insbesondere in Form der genannten Anlenkkonsole angreifen, um das Arbeitsaggregat gegenüber dem Anbaubock gewichtszuentlasten.

In Weiterbildung der Erfindung kann zusätzlich zu der gemeinsamen Verstellbarkeit der beiden Entlastungsfedern auch eine individuelle Verstellbarkeit zumindest einer der Entlastungsfedern unabhängig von der anderen Entlastungsfeder vorgesehen sein. Insbesondere kann zumindest eine der Entlastungsfedern an einem Übertragerteil angelenkt sein, dessen effektive Länge veränderbar ist, beispielsweise indem der Angriffspunkt der Entlastungsfeder an besagtem Übertragerteil und/oder der Angriffspunkt des Übertragerteils am Maschinenteil, an dem die Entlastungsfeder angreift, verstellbar ausgebildet ist. Vorteilhafterweise kann ein solches Übertragerteil beispielsweise zwischen der jeweiligen Entlastungsfeder und dem Arbeitsaggregat und/oder dem zuvor genannten Ausleger angeordnet sein.

Vorteilhafterweise kann der genannte Übertrager in die zugehörige Entlastungsfeder versenkt werden, insbesondere unterschiedlich weit eingeschoben werden und an der Entlastungsfeder in verschiedenen Positionen fixiert werden, gegebenenfalls unter Bereitstellung eines gewünschten Freilaufs und/oder eines gewünschten Spiels in Wirkrichtung der Feder.

Vorteilhafterweise können die Entlastungsfedern und deren Anlenkung derart beschaffen sein, dass zumindest eine der Entlastungsfedern, insbesondere die stärkere und/oder größere Feder und/oder die direkt am Arbeitsaggregat angreifende Feder, in der angehobenen Transportstellung des Arbeitsaggregats zumindest im Wesentlichen vollständig entlastet sind. Hierdurch wird in der ausgehobenen Transportstellung eine einfache Verstellbarkeit über die genannte gemeinsame Verstellvorrichtung ermöglicht, ohne dass hierfür ein größerer Kraftaufwand erforderlich ist.

Insbesondere kann die Federanlenkung der Entlastungsfedern mit einem Freilauf versehen sein, der in der Transportstellung des Arbeitsaggregats einen Freigang der Entlastungsfedern und/oder der Anlenkpunkte der Entlastungsfedern ermöglicht und in der abgesenkten Arbeitsstellung an eine Begrenzung gefahren ist, um die Gewichtsentlastung bzw. die Federkraft bereitstellen zu können.

Beispielsweise kann zumindest eine der Entlastungsfedern mit zumindest einem ihrer Anlenkpunkte in einer Längsnut geführt sein und/oder mit ihrem Anlenkpunkt an einer Schiebeführung mit Begrenzung angreifen, die einen Freigang in Richtung der Wirklinie der Federeinrichtung ermöglicht, wenn das Arbeitsaggregat in die Transportstellung ausgehoben ist.

Das Ausheben des Arbeitsaggregats in die Transportstellung kann in an sich bekannter Weise über einen Fremdenergie betätigten Kraftheber, beispielsweise umfassend einen Hydraulikzylinder, erfolgen.

Die Erfindung wird nachfolgend anhand des bevorzugten Ausführungsbeispiels und zugehöriger Zeichnungen näher erläutert. Die Zeichnungen zeigen:
- Fig. 1:: eine Heckansicht eines landwirtschaftlichen Anbaugeräts in Form einer Mähmaschine nach einer vorteilhaften Ausführung der Erfindung, wobei das Arbeitsaggregat in Form eines Mähbalkens schwenkbar an einem Ausleger angelenkt ist und die zwei Entlastungsfedern für das Arbeitsaggregat gezeigt sind,
- Fig. 2:: eine ausschnittsweise, vergrößerte Darstellung der beiden Entlastungsfedern des Anbaugeräts aus Fig. 1, die deren Anlenkung an einer verstellbaren Anlenkkonsole am Anbaubock zeigt,
- Fig. 3:: eine ausschnittsweise Darstellung der Entlastungsfedern und deren Anlenkung an der Anlenkkonsole, wobei die genannte Anlenkkonsole in verschiedenen Stellungen dargestellt ist,
- Fig. 4:: eine ausschnittsweise, perspektivische Darstellung der verstellbaren Anlenkkonsole aus Fig. 3, und
- Fig. 5:: eine ausschnittsweise Darstellung der Anlenkung einer der Entlastungsfedern über einen verstellbaren Übertrager, der in das Innere der Entlastungsfeder versenkbar ist.

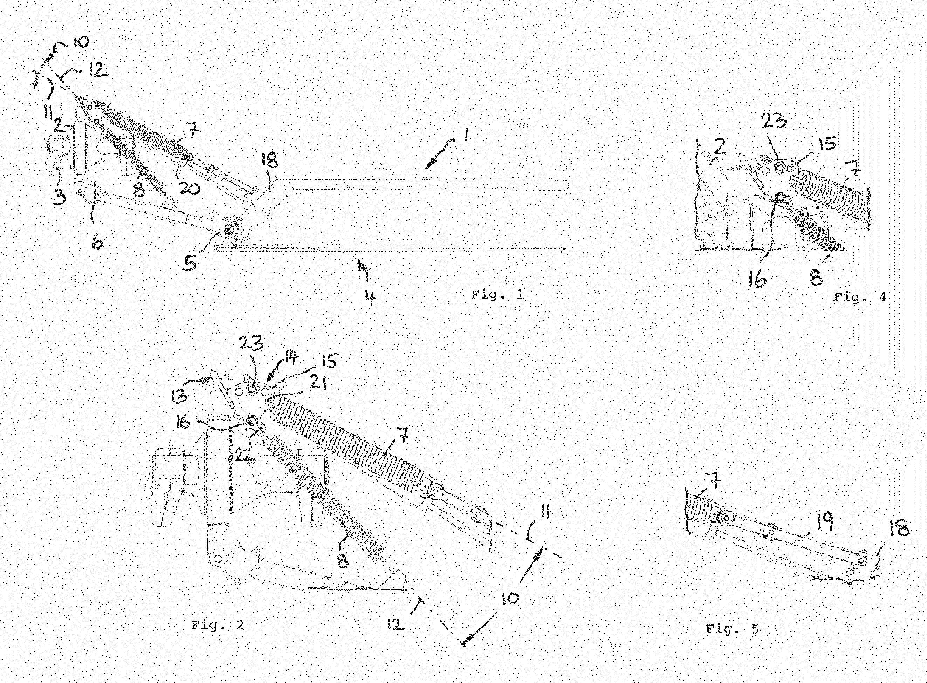

Wie Fig. 1 zeigt, kann das landwirtschaftliche Anbaugerät 1 als Mähmaschine ausgebildet sein und als Arbeitsaggregat 4 ein Mähwerk, beispielsweise in Form eines Schneidbalkens, mit einer Reihe von rotierend antreibbaren Schneidtellern aufweisen.

Das genannte Arbeitsaggregat 4 kann dabei mittels eines Anbaubocks 2 seitlich auskragend von einem nicht dargestellten Schlepper angebaut werden, wobei der genannte Anbaubock 2 in üblicher Weise über eine Dreipunkt-Anlenkung heckseitig oder frontseitig an einem Schlepper angebaut werden kann.

Wie Fig. 1 zeigt, kann das Arbeitsaggregat 4 über einen Ausleger 17 an dem Anbaubock 2 angelenkt sein, welcher Ausleger 17 um eine liegende Schwenkachse 6 gegenüber dem Anbaubock 2 angehoben und abgesenkt werden kann, wobei der Ausleger 17 im Bereich seines inneren Endes um besagte Schwenkachse 6 direkt am Anbaubock 2 oder einem damit verbundenen Rahmenteil angelenkt sein kann.

Das Arbeitsaggregat 4 kann an dem genannten Ausleger 17 um eine weitere Schwenkachse 5 schwenkbar angelenkt sein, wobei die genannte Schwenkachse 5 am äußeren Endabschnitt des Auslegers 17 vorgesehen sein kann.

Die Schwenkachsen 5 und 6 können parallel zueinander jeweils liegend ausgerichtet sein und in Arbeitsstellung etwa in Fahrtrichtung weisen.

Um das Arbeitsaggregat anheben und absenken zu können, kann ein Kraftheber 20, beispielsweise in Form eines Hydraulikzylinders, zwischen dem Anbaubock bzw. einem damit verbundenen Rahmenteil einerseits und dem Arbeitsaggregat 4 andererseits vorgesehen sein, mittels dessen das Arbeitsaggregat 4 um die genannte Schwenkachse 5 nach oben ausgehoben werden kann, wobei auch der Ausleger 17 um die Schwenkachse 6 ein Stück weit nach oben schwenken kann, gegebenenfalls durch einen Anschlag oder eine Strebe begrenzt. In der genannten Transportstellung kann das Arbeitsaggregat 4 näherungsweise vertikal oder etwa aufrecht ausgerichtet sein, während das Arbeitsaggregat 4 in der abgesenkten Arbeitsstellung liegend etwa bodenparallel ausgerichtet sein kann, vgl. Fig. 1.

Bei Anlenkung des Arbeitsaggregats 4 über einen Ausleger 17 ergeben sich grundsätzlich zwei Höhenausgleichsbewegungen in der Arbeitsstellung: Zum einen kann das Arbeitsaggregat 4 insgesamt auf- und abfahren, indem der Ausleger 17 nach oben bzw. unten wippt. Zum anderen kann das Arbeitsaggregat 4 selbst auf und nieder wippen, indem es um die genannte Schwenkachse 5 verschwenkt.

Um das Arbeitsaggregat 4 in der abgesenkten Arbeitsstellung hinsichtlich seines Gewichts zu entlasten, sind zwei Entlastungsfedern 7 und 8 vorgesehen, die einerseits am Anbaubock 2 bzw. dem damit verbundenen Rahmenteil 2 angelenkt sind und andererseits mit dem Arbeitsaggregat 4 bzw. dem Ausleger 17 verbunden sind, vgl. Fig. 1. Insbesondere kann eine äußere Entlastungsfeder 7 an einem mit dem Arbeitsaggregat 4 verbundenen Rahmenteil 18 angreifen, welches um die Schwenkachse 5 relativ zum Ausleger 17 verschwenken kann. Die andere Entlastungsfeder 8 kann an dem Ausleger 17 angreifen, beispielsweise in einem mittleren Abschnitt des genannten Auslegers 17, wie dies Fig. 1 zeigt.

Die Entlastungsfedern 7 und 8 greifen mit ihren Arbeitsaggregat-seitigen Anlenkpunkten, also auf gegenüberliegenden Seiten der Schwenkachse 5, an, um gezielt die Wippbewegung des Arbeitsaggregats 4 einerseits und die Wippbewegung des Auslegers 17 andererseits zu entlasten.

Wie Fig. 1 zeigt, können die Wirklinien 11 und 12 der Entlastungsfedern 7 und 8 zumindest in der Arbeitsstellung eine zueinander gespreizte, insbesondere spitzwinklig gespreizte, beispielsweise unter einem Winkel von 1° bis 40° oder 5° bis 30° oder 10° bis 25° aufgespreizt sein.

Als Entlastungsfedern 7 und 8 können beispielsweise mechanische Schraubenfedern Verwendung finden, wobei jedoch auch andere Federtypen, wie beispielsweise Druckgasfedern, vorgesehen sein könnten. Die genannten Entlastungsfedern 7 und 8 erlauben eine kraftbeaufschlagte Längung, um das beschriebene Auf- und Niederwippen unter Beaufschlagung einer Entlastungskraft zu ermöglichen.

Wie die Figuren 2 bis 4 näher zeigen, sind die Entlastungsfedern 7 und 8 mit ihren inneren Anlenkpunkten 21, 22, beide gemeinsam an einer Anlenkkonsole 15 befestigt bzw. angelenkt. Die genannte Anlenkkonsole 15 ist dabei am Anbaubock 2 oder einem damit verbundenen Schwenkkopf gelagert, an dem beispielsweise auch der zuvor genannte Kraftheber 20 angelenkt sein kann.

Die genannte Anlenkkonsole 15 ist dabei als verstellbares Stellteil 14 ausgebildet, welches lageveränderbar ist und in verschiedenen Stellungen bzw. Positionen fixiert werden kann. Insbesondere kann die Anlenkkonsole 15 um eine liegende Konsolenschwenkachse 16, die sich etwa parallel zu den vorgenannten Schwenkachsen 5 und 6 erstrecken kann, schwenkbar gelagert sein, wobei Haltemittel 23 die Anlenkkonsole 15 in verschiedenen Schwenkpositionen festhalten können. Die genannten Haltemittel 23 können beispielsweise als formschlüssige Verriegelungsmittel ausgebildet sein, beispielsweise in Form eines Steckbolzens, der in verschiedene Steckausnehmungen einsteckbar ist.

Durch Vorsehen eines bestimmten Lochbildes in der Anlenkkonsole 15 und einer vorbestimmten Bolzenanordnung kann die Anlenkkonsole 15 in verschiedene, vorgegebene Winkelstellungen und gegebenenfalls auch in verschiedene, zueinander verschobene Stellungen verbracht werden. Beispielsweise kann auch der die Konsolenschwenkachse bestimmende Achsbolzen versetzt werden, um eine translatorische Verschiebung, gegebenenfalls überlagert durch einen Winkelversatz, zu ermöglichen, was gegebenenfalls aber auch durch eine Schiebeführung der Konsolenschwenkachse möglich ist. Dementsprechend ist die Lagerung der Anlenkkonsole 15 dazu ausgebildet, verschiedene Winkelstellungen der Anlenkkonsole und/oder verschiedene, zueinander verschobene Stellungen zu ermöglichen, in denen die Anlenkkonsole 15 jeweils fixierbar ist.

Durch Verbringen der Anlenkkonsole 15 in die verschiedenen Winkelstellungen und/oder Schiebestellungen und/oder Versatzstellungen verstellen sich die anbauboxseitigen Anlenkpunkte 21 und 22 der beiden Entlastungsfedern 7 und 8, sodass beide Entlastungsfedern 7 und 8 gleichzeitig in ihren Federkraftwerten eine Verstellung erfahren, wobei durch die vorbestimmte Kinematik der Konsolenverstellung eine aufeinander abgestimmte Einstellung der Federkraftwerte erfolgt.

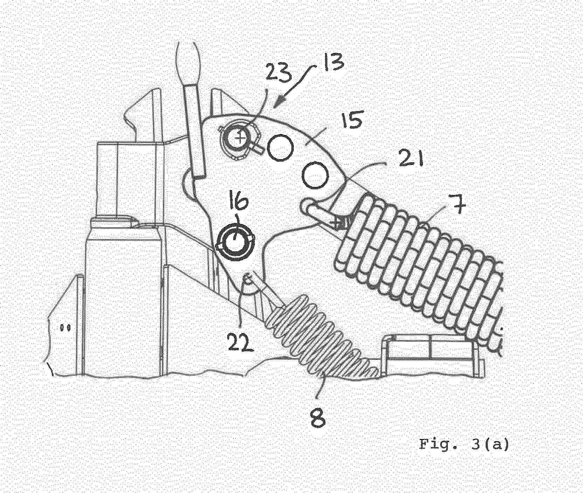

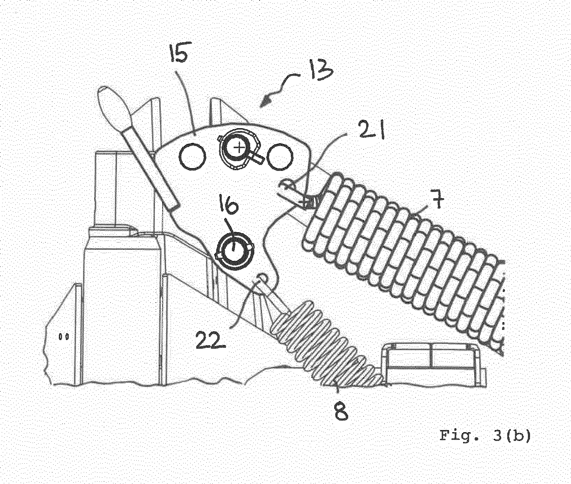

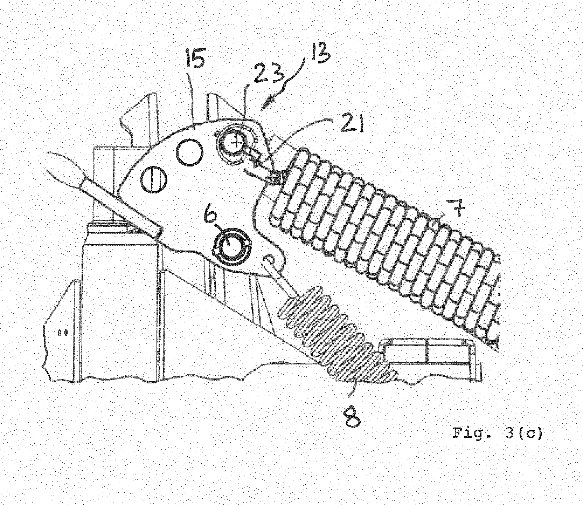

Wie Fig. 3 verdeutlicht, können die Anlenkpunkte 21 und 22 der Entlastungsfedern 7 und 8 an der Anlenkkonsole 15 relativ zur Konsolenschwenkachse 16 unterschiedlich weit beabstandet sein bzw. unterschiedliche Hebelarme aufweisen, so dass die Entlastungsfedern 7 und 8 unterschiedliche Verstellungen erfahren, wenn die Anlenkkonsole 15 in eine neue Stellung versetzt wird. Insbesondere kann die innere Entlastungsfeder 8, die an dem Ausleger 17 angreift, näher an der Konsolenschwenkachse 16 angelenkt sein als die äußere, am Rahmenteil 18 angreifende Entlastungsfeder 7. Alternativ oder zusätzlich kann in einer Mittelstellung der Anlenkkonsole 15, aus der heraus die Anlenkkonsole 15 in gegenüber liegende Richtungen verschwenkbar ist, die Wirklinie 12 der genannten inneren Entlastungsfeder 8 etwa näherungsweise durch die Konsolenschwenkachse 16 verlaufen und/oder einen deutlich geringeren Abstand von der Konsolenschwenkachse 16 aufweisen als die Wirklinie 11 der äußeren Entlastungsfeder 7.

Alternativ oder zusätzlich kann die Anordnung der inneren Anlenkpunkte 21 und 22 derart beschaffen sein, dass die eine Entlastungsfeder, insbesondere die innere Entlastungsfeder 8, beim Verschwenken der Anlenkkonsole 15 eine stärkere Verkippung ihrer Wirklinie erfährt und/oder eine geringere Längung erfährt, während die andere, insbesondere äußere Entlastungsfeder 7 eine im Vergleich hierzu geringere oder gar keine Verkippung ihrer Wirklinie und/oder eine vergleichsweise größere Längung erfährt.

Um eine einfache Verstellung der Anlenkkonsole 15 unter geringem Kraftaufwand zu ermöglichen, kann das Entlastungsfedersystem derart beschaffen sein, dass beide Entlastungsfedern 7 und 8 in der ausgehobenen Transportstellung des Arbeitsaggregats 4 zumindest näherungsweise vollständig entlastet sind und/oder unter Spiel freigängig sind. Dies ermöglicht es, die Anlenkkonsole 15 aus der jeweils verriegelten Stellung zu lösen und mit geringem Kraftaufwand in eine neue, verstellte Stellung zu bewegen und dort wieder zu verriegeln.

Beispielsweise können die Entlastungsfedern 7 und 8 in ihrer Anlenkung einen Freilauf besitzen, beispielsweise indem einer der Anlenkpunkte in einer Längsnut oder einer ähnlichen Schiebeführung geführt ist.

Wie Fig. 5 zeigt, kann beispielsweise die äußere Entlastungsfeder 7 - aber analog auch die innere Entlastungsfeder 8 - an einem Übertrager 19 eingehängt sein, der die Entlastungsfeder mit dem jeweiligen Anlenkpunkt am Arbeitsaggregat 4 bzw. dem Ausleger 17 verbindet. Der Übertrager 19 kann dabei in der genannten Weise den Freilauf realisieren, wobei vorteilhafterweise der Übertrager 19 in das Innere der Entlastungsfeder 7 bzw. 8 einfahren kann. Beispielsweise kann ein Querbolzen am Übertrager 19 einen als Anschlag fungierenden Anlenkpunkt bilden, der in die Entlastungsfeder einfahren kann, wenn das Arbeitsaggregat 4 in die Transportstellung ausgehoben wird.

Um eine Einstellung auf verschiedene Maschinenkonfigurationen zu ermöglichen, kann der genannte Übertrager 19 längenveränderbar ausgebildet sein und/oder in verschiedenen Längenstellungen fixierbar sein und/oder einen verschiebbaren, in verschiedenen Stellungen fixierbaren Anlenkpunkt für die Entlastungsfeder besitzen. Dies kann beispielsweise durch einen versetzbaren Querbolzen, der als Anschlag- bzw. Einhängepunkt für die Feder fungiert, realisiert sein.

## Patentansprüche

1. Landwirtschaftliches Anbaugerät zum Anbau an einen Schlepper, insbesondere in Form einer Mähmaschine (1), mit einem Anbaubock (2), der Befestigungsmittel (3) zum Befestigen am Schlepper aufweist, einem am Anbaubock (2) aufgehängten Arbeitsaggregat (4), das um eine liegende Schwenkachse (5, 6) zwischen einer abgesenkten Arbeitsstellung und einer angehobenen Transport- und/oder Vorgewendestellung schwenkbar gelagert ist, wobei ein fremdenergiebetätigter Kraftheber (20) zum Ausheben des Arbeitsaggregats (4) in die Transport- und/oder Vorgewendestellung vorgesehen ist, sowie zumindest zwei Entlastungsfedern (7, 8) zur Gewichtsentlastung des Arbeitsaggregats (4) in der abgesenkten Arbeitsstellung, die unterschiedliche Angriffspunkte am Arbeitsaggregat (4) und/oder unterschiedliche Hebelarme bezüglich der Schwenkachse (5) aufweisen, **dadurch gekennzeichnet, dass** für die mehreren Entlastungsfedern (7, 8) eine gemeinsame Verstellvorrichtung zum gemeinsamen, aufeinander abgestimmten Verstellen der Anlenkpunkte der Entlastungsfedern (7, 8) am Anbaubock (2) in der ausgehobenen Transport- und/oder Vorgewendestellung vorgesehen ist.

2. Landwirtschaftliches Anbaugerät nach dem vorhergehenden Anspruch, wobei die Verstellvorrichtung dazu ausgebildet ist, einen Spreizwinkel (10) zwischen den Wirklinien (11, 12) der Entlastungsfedern (7, 8) zu verstellen.

3. Landwirtschaftliches Anbaugerät nach einem der vorhergehenden Ansprüche, wobei die Verstellbewegung dazu ausgebildet ist, die Federkraftwerte der Entlastungsfedern (7, 8) unterschiedlich stark zu verstellen.

4. Landwirtschaftliches Anbaugerät nach einem der vorhergehenden Ansprüche, wobei die Verstellvorrichtung einen Verstellmechanismus (13) mit einem beweglichen Stellteil (14) umfasst, der eine zentrale Betätigungsbewegung in unterschiedliche Stellbewegungen für die Entlastungsfedern (7, 8) umsetzt.

5. Landwirtschaftliches Anbaugerät nach dem vorhergehenden Anspruch, wobei der Verstellmechanismus (13) dazu ausgebildet ist, zumindest eine der Entlastungsfedern (7) in ihrer Vorspannkraft zu verstellen und gleichzeitig die Wirklinie (12) der anderen Entlastungsfeder (8) zu verstellen.

6. Landwirtschaftliches Anbaugerät nach einem der beiden vorhergehenden Ansprüche, wobei der Verstellmechanismus (13) als Stellteil (14) eine Anlenckonsole (15) umfasst, die um eine Konsolenschwenkachse (16) verschwenkbar und/oder in verschiedenen Schwenkstellungen festhaltbar ist, wobei die genannten Entlastungsfedern (7, 8) an der genannten Anlenkkonsole (15) angelenkt sind und/oder die Anlenkpunkte der Entlastungsfedern (7, 8) mit der Anlenkkonsole (15) verbunden sind.

7. Landwirtschaftliches Anbaugerät nach dem vorhergehenden Anspruch, wobei die Anlenkpunkte der Entlastungsfedern (7, 8) an der genannten Anlenkkonsole (15) derart gewählt sind, dass der Hebelarm der einen Entlastungsfeder (7) in einer Mittelstellung der Anlenkkonsole (15) mindestens zwei mal oder mindestens drei mal oder mindestens fünf mal so groß ist wie der Hebelarm der anderen Entlastungsfeder (8).

8. Landwirtschaftliches Anbaugerät nach einem der vorhergehenden Ansprüche, wobei das Arbeitsaggregat (4) an einem Ausleger (17) schwenkbar angelenkt ist, der seinerseits schwenkbar am Anbaubock (2) angelenkt ist, wobei eine der Entlastungsfedern (8) an besagtem Ausleger (17) angreift und eine andere Entlastungsfedern (7) an einem Rahmenteil (18) des Arbeitsaggregats (4) angreift, das an dem Ausleger (17) schwenkbar angelenkt ist.

9. Landwirtschaftliches Anbaugerät nach dem vorhergehenden Anspruch, wobei die Entlastungsfedern (7, 8) auf gegenüberliegenden Seiten der liegenden Schwenkachse (5), um die das Arbeitsaggregat (4) schwenkbar ist, angelenkt sind.

10. Landwirtschaftliches Anbaugerät nach einem der vorhergehenden Ansprüche, wobei zumindest eine der Entlastungsfedern (7) an einem Übertrager (19) angreift, der längenveränderbar ausgebildet ist und/oder einen gegenüber der Entlastungsfeder verschieblichen Angriffspunkt besitzt.

11. Landwirtschaftliches Anbaugerät nach dem vorhergehenden Anspruch, wobei der Übertrager (19) in das Innere der Entlastungsfeder (7) versenkbar ausgebildet ist.

12. Landwirtschaftliches Anbaugerät nach einem der vorhergehenden Ansprüche, wobei zumindest eine der Entlastungsfedern (7, 8) und/oder deren Angriffspunkte mit einem Freilauf versehen sind, so dass die Entlastungsfeder (8) in der angehobenen Transportstellung des Arbeitsaggregats (4) freigängig und/oder im Wesentlichen vollständig entlastet ist.

## Claims

1. Agricultural cultivation device for attaching to a tractor, especially in the form of a mowing machine (1), with a headstock (2) which comprises fastening means (3) to fasten it to the tractor, a working unit (4) suspended from a headstock (2), which is pivotably mounted about a horizontal pivot axis (5, 6) between a lowered working position and a raised transport position and/or headland position, wherein a power lift (20) operated by an external source of power is provided to lift the working unit (4) in the transport position and/or headland position, and at least two relief springs (7, 8) to reduce the weight load of the working unit (4) in the lowered position, which have different engagement points on the working unit (4) and/or different lever arms in relation to the pivot axis (5), **characterized in that**, that for the several relief springs (7, 8) a common adjustment device is provided for combined and coordinated adjustment of the attachment points of the relief springs (7, 8) on the headstock (2) in the raised transport and/or headland position.

2. Agricultural cultivation device according to the preceding claim, wherein the adjustment device is designed for the purpose of adjusting an angle of spread (10) between the lines of action (11, 12) of the relief springs (7, 8).

3. Agricultural cultivation device according to one of the preceding claims, wherein the adjustment movement is configured to adjust the spring force values of the relief springs (7, 8) in a differently intense manner.

4. Agricultural cultivation device according to one of the preceding claims, wherein the adjustment device comprises an adjustment mechanism (13) with a movable operating element (14), which converts a central actuating movement into different operating movements for the relief springs (7, 8).

5. Agricultural cultivation device according to the preceding claim, wherein the adjustment mechanism (13) is configured to adjust the preload force of at least one of the relief springs (7) and, at the same time, to adjust the line of action (12) of the other relief spring (8).

6. Agricultural cultivation device according to one of the two preceding claims, wherein the adjustment mechanism (13) comprises as an operating element (14) an attachment bracket (15), which can be pivoted about a bracket pivot axis (16) and/or can be held steady in different pivot positions, wherein said relief springs (7, 8) are attached on said attachment bracket (15) and/or the attachment points of the relief springs (7, 8) are connected to the attachment bracket (15).

7. Agricultural cultivation device according to the preceding claim, wherein the attachment points of the relief springs (7, 8) on said attachment bracket (15) are selected in such a way that the lever arm of the one relief spring (7) in a centre position of the attachment bracket (15) is at least twice or at least thrice or at least five times bigger than the lever arm of the other relief spring (8).

8. Agricultural cultivation device according to one of the preceding claims, wherein the working unit (4) is pivotably mounted on a cantilever (17), which in turn is pivotably attached to the headstock (2), wherein one of the relief springs (8) engages with said cantilever (17) and another relief spring (7) engages with a frame section (18) of the working unit (4), which is pivotably mounted on the cantilever (17).

9. Agricultural cultivation device according to the preceding claim, wherein the relief springs (7, 8) are mounted on opposite sides of the horizontal swivel axis (5) about which the working unit (4) can be pivoted.

10. Agricultural cultivation device according to one of the preceding claims, wherein at least one of the relief springs (7) is attached to a transmission member (19), which has a height-adjustable design and/or has an engagement point that can be displaced relative to the relief spring.

11. Agricultural cultivation device according to the preceding claim, wherein the transmission member (19) is designed to retract inside the relief spring (7).

12. Agricultural cultivation device according to one of the preceding claims, wherein at least one of the relief springs (7, 8) and/or its engagement points is provided with a freewheel, so that the relief spring (8) can freely operate or is substantially fully relieved in the raised transport position of the working unit (4).

## Revendications

1. Outil porté agricole destiné à être monté sur un tracteur, en particulier sous la forme d'une faucheuse (1), avec un chevalet d'attelage (2), qui présente des moyens de fixation (3) destinés à être fixés sur le tracteur, un groupe de travail (4) suspendu sur le chevalet d'attelage (2), qui est monté de manière à pouvoir pivoter autour d'un axe de pivotement horizontal (5, 6) entre une position de travail abaissée et une position de transport et/ou de tournière relevée, dans lequel un vérin (20) actionné par une force extérieure est prévu pour soulever le groupe de travail (4) dans la position de transport et/ou dans la position de tournière, ainsi qu'au moins deux ressorts de décharge (7, 8) pour décharger en termes de poids le groupe de travail (4) dans la position de travail abaissée, qui présentent différents points d'attaque sur le groupe de travail (4) et/ou différents bras de levier par rapport à l'axe de pivotement (5), **caractérisé en ce qu'**est prévu, pour les plusieurs ressorts de décharge (7, 8), un dispositif d'ajustement commun pour ajuster conjointement de manière adaptée les uns aux autres les points d'articulation des ressorts de décharge (7, 8) sur le chevalet d'attelage (2) dans la position de transport et/ou de tournière soulevée.

2. Outil porté agricole selon la revendication précédente, dans lequel le dispositif d'ajustement est réalisé pour ajuster un angle d'écartement (10) entre les lignes actives (11, 12) des ressorts de décharge (7, 8).

3. Outil porté agricole selon l'une quelconque des revendications précédentes, dans lequel le déplacement d'ajustement est réalisé pour ajuster avec une intensité différente les valeurs de force de ressort des ressorts de décharge (7, 8).

4. Outil porté agricole selon l'une quelconque des revendications précédentes, dans lequel le dispositif d'ajustement comprend un mécanisme d'ajustement (13) avec une partie de réglage mobile (14), qui transforme un déplacement d'actionnement central en différents déplacements de réglage pour les ressorts de décharge (7, 8).

5. Outil porté agricole selon la revendication précédente, dans lequel le mécanisme d'ajustement (13) est réalisé pour ajuster la force de précontrainte d'au moins un des ressorts de décharge (7) et pour ajuster dans le même temps la ligne active (12) de l'autre ressort de décharge (8).

6. Outil porté agricole selon l'une quelconque des deux revendications précédentes, dans lequel le mécanisme d'ajustement (13) comprend en tant que partie de réglage (14) une console d'articulation (15), qui peut être pivotée autour d'un axe de pivotement de console (16) et/ou peut être immobilisée dans différentes positions de pivotement, dans lequel lesdits ressorts de décharge (7, 8) sont articulés sur ladite console d'articulation (15) et/ou les points d'articulation des ressorts de décharge (7, 8) sont reliés à la console d'articulation (15).

7. Outil porté agricole selon la revendication précédente, dans lequel les points d'articulation des ressorts de décharge (7, 8) sont choisis de telle manière sur ladite console d'articulation (15) que le bras de levier d'un ressort de décharge (7) est, dans une position centrale de la console d'articulation (15), au moins deux fois ou au moins trois fois ou au moins cinq fois plus grand que le bras de levier de l'autre ressort de décharge (8).

8. Outil porté agricole selon l'une quelconque des revendications précédentes, dans lequel le groupe de travail (4) est articulé de manière à pouvoir pivoter sur une flèche (17), qui est articulée quant à elle de manière à pouvoir pivoter sur le chevalet d'attelage (2), dans lequel un des ressorts de décharge (8) s'engage sur ladite flèche (17) et un autre ressort de décharge (7) s'engage sur une partie de cadre (18) du groupe de travail (4), qui est articulée de manière à pouvoir pivoter sur la flèche (17).

9. Outil porté agricole selon la revendication précédente, dans lequel les ressorts de décharge (7, 8) sont articulés sur des côtés se faisant face de l'axe de pivotement horizontal (5) autour duquel le groupe de travail (4) peut pivoter.

10. Outil porté agricole selon l'une quelconque des revendications précédentes, dans lequel au moins un des ressorts de décharge (7) s'engage sur un transmetteur (19), qui est réalisé avec une longueur variable et/ou possède un point d'attaque pouvant coulisser par rapport au ressort de décharge.

11. Outil porté agricole selon la revendication précédente, dans lequel le transmetteur (19) est réalisé de manière escamotable à l'intérieur du ressort de décharge (7).

12. Outil porté agricole selon l'une quelconque des revendications précédentes, dans lequel au moins un des ressorts de décharge (7, 8) et/ou ses points d'attaque sont pourvus d'une roue libre de sorte que le ressort de décharge (8) est déchargé librement et/ou sensiblement totalement dans la position de transport relevée du groupe de travail (4).
